# EUROPEAN PATENT APPLICATION

(11) **EP 3 312 589 A1**
(43) Date of publication of application: **25.04.2018**
(21) Application number: 17153561.0
(22) Date of filing: 27.01.2017
(51) Int. Cl.: G01N 21/3504, H01H 33/56, H02B 13/065

(54) **OPTICAL ANALYZING DEVICE AND METHOD FOR DETERMINING A PARAMETER OF A GAS ARRANGED INSIDE A GAS-INSULATED ELECTRICAL APPARATUS**

(71) Applicant: ABB Schweiz AG, 5400 Baden (CH)
(72) Inventor: Kramer, Axel, 5430 Wettingen (CH); Maas, Deran, 8046 Zürich (CH); Porus, Mariya, 8953 Dietikon (CH); Paul, Thomas Alfred, 8820 Wädenswil (CH)
(74) Representative: ABB Patent Attorneys

(57) **Abstract**

An analyzing device for optically determining at least a parameter of a gas (11) arranged inside a gas-insulated electrical apparatus (1) or of at least a component thereof, comprises a light source (2) for generating at least an input light beam to be sent into the gas-insulated electrical apparatus (1), an opto-mechanical arrangement arranged at least partially inside the gas-insulated electrical apparatus (1) and connected to the light source (2), and a light detector (3) arranged outside the gas-insulated electrical apparatus (1). The analyzing device is adapted to determine the parameter of the gas without extracting gas from the gas-insulated electrical apparatus (1) by carrying out gas measurements entirely inside the gas-insulated electrical apparatus (1).

## Description

### Technical Field

The invention relates to an analyzing device for optically determining at least a parameter of a gas arranged inside a gas-insulated electrical apparatus or of at least a component thereof according to the respective independent device claims and a corresponding method for analysis according to the independent method claim.

### Background Art

The composition of gas within gas-insulated electrical apparatuses, like SF₆ gas-insulated switchgear (GIS) and eco-efficient switchgear using other gases, is important in assessing the health of the electrical apparatus and hence its functionality. Numerous effects can lead to undesired changes in the composition of the insulation gas, and knowledge of these changes allows developing faults to be noticed early.

For example, water is regarded as an impurity, which can appear e.g. due to outgassing of insulators or permeation through sealings from the outside. Increased humidity raises the dew point, thus compromising the minimum specified operating temperature.

Furthermore, decomposition products as a result of arcing or partial discharges can appear, which are toxic or corrosive in presence of humidity.

Furthermore, the composition of the insulating gas itself may also give valuable information with respect to the functionality status of the GIS. This aspect is particularly important in case the insulation gas per se is a gas mixture (e.g. containing perfluoroketone, PFK, and an inert carrier gas).

Such GIS require intermittent service checks for the time frame from commissioning until end of life. Among other parameters, these checks include also analysis of the gas quality (e.g. PFK and water concentration).

Service personnel must be able to efficiently perform the following key procedures in the field:
- Verification of the gas composition (preferably including impurities) after compartment filling,
- Determination of the gas composition in compartments during scheduled service,
- Determination of gas composition upon demand (e.g. when significant SF₆ or PFK-decomposition or significant water concentration is suspected).

These tasks require intermittent (short-term) composition measurements only and do not require an online continuous monitoring tool.

This gas diagnostics is usually done by extraction of gas from the GIS, performing the required measurements and returning a large fraction of the gas back to the GIS after a specific measurement time. A typical setup includes an analyzing device with an extraction tube connected to a gas vessel.

Mobile units for diagnosis of SF₆-filled switchgear are available commercially, e.g. EMT's SF₆-Analyzer "IR-Zero Waste", MBW's SF₆ Analyzer "973" or WIKA's SF₆ analyzer "Model GA11". Such units are based on infrared optical absorption technology to measure a wealth of known SF₆ decomposition products (EMT and WIKA) and others focus on humidity and selected decomposition product detection only (MBW).

Furthermore, online analyzers are also used for SF₆ gas quality checks. For example, the company Vaisala offers an online monitoring tool (Multiparameter Transmitter DPT145). The DPT145 monitors dew point, pressure and temperature. However, this analyzer is restricted to SF₆ gas insulation and cannot be applied to the novel PFK based insulation gas.

The analysis of the gas is widely performed based on light absorption and a subsequent analysis of the output light by spectroscopic methods. A light beam of known wavelength or wavelength spectrum is sent into the gas analyte. The gas or a component of the gas absorbs to a certain extent the light of a certain wavelength, thereby permitting determination of its amount by comparing the light intensity before entering the gas with the light intensity it has after leaving the gas again. This is known and will not be described in more detail here.

The solutions employed today have a number of disadvantages:
- shut-down of GIS is required, resulting in a more complicated scheduling of maintenance and longer service intervals,
- risk of larger gas loss due to leaks in analyzer, connectors or extraction tube,
- risk of contamination of insulation gas (other "contamination" gas species can additionally be returned, e.g. water),
- gas loss, resulting in loss of dielectric insulation (a fraction of the extracted gas is lost the more service checks are executed),
- large measurement time (typically 15-20 min. due to sticking problem of gas molecules and gas return),
- high analyzer cost.

### Disclosure of the Invention

Hence, it is a general object of the invention to avoid or reduce said disadvantages.

This object is reached by an analyzing device and a corresponding method for optically determining at least a parameter of a gas arranged inside a gas-insulated electrical apparatus or of at least a component thereof.

In order to implement this and still further objects of the invention, which will become more readily apparent as the description proceeds, the analyzing device according to a first aspect of the invention is manifested by the features that it comprises a light source, an opto-mechanical arrangement and a light detector.

The light source is arranged outside the gas-insulated electrical apparatus for generating at least an input light beam to be sent into the gas-insulated electrical apparatus. The opto-mechanical arrangement is arranged at least partially inside the gas-insulated electrical apparatus and connected to the light source. The opto-mechanical arrangement defines an optical measurement path along which an intermediate light beam travels. The intermediate light beam results from an interaction of the input light beam with the gas in the electrical apparatus. The light detector is also arranged outside the gas-insulated electrical apparatus. It is adapted to detect an output light beam which results from the intermediate light beam and which exits the gas-insulated electrical apparatus at an exit point. The opto-mechanical arrangement comprises at least a first optical waveguide arranged inside the gas-insulated electrical apparatus and adapted to guide the intermediate light beam along the optical measurement path. Alternatively, the first optical waveguide is adapted to guide the first light beam and/or the output light beam along a light transport path located inside the gas-insulated electrical apparatus.

Advantageously, by using a first optical waveguide to "transport" the light beam to the desired position inside the GIS (start of measurement path), the measurement can be performed in areas of the GIS where no interference with its operation occurs, i.e. where the electric field in the GIS is substantially not influenced. This is particularly advantageous in cases where an input point for the input light beam into the GIS is located in an unfavorable position with respect to the electric field.

As mentioned, one feature of the analyzing device is that the opto-mechanical arrangement defines the optical measurement path along which the intermediate light beam travels, which intermediate light beam results from the interaction of the input light beam with the gas. In other words, the measurement is performed entirely inside the GIS. This is not only advantageous due to the fact that it simplifies measurement, but also because the measurement is carried out under the original conditions inside the GIS, e.g. temperature and pressure, thereby leading to more accurate results than in cases when gas would be extracted from the GIS. Furthermore, the disadvantages of the known solutions mentioned above are substantially eliminated.

In a second aspect of the invention the analyzing device comprises a light source and a light detector. The light source is arranged outside the gas-insulated electrical apparatus for generating at least an input light beam to be sent into the gas-insulated electrical apparatus through an input point. The light detector is adapted to detect an output light beam which exits the gas-insulated electrical apparatus through an exit point and is arranged outside the gas-insulated electrical apparatus in such a way that an optical measurement path is defined at least in a section of a path between the input point and the exit point. An intermediate light beam travels along the optical measurement path and results from an interaction of the input light beam with the gas. No optical waveguide is arranged in a total path of light from the light source to the light detector.

Due to the fact that no optical waveguide is used, the analyzing device according to the second aspect of the invention is simpler and therefore less expensive. In contrast to the first aspect of the invention, it may be the preferred choice in case the configuration and shape of the GIS allows a straight path for the light beam from input to output.

The third aspect of the invention concerns said analyzing method. The method comprises the steps of
a) connecting the analyzing device to the gas-insulated electrical apparatus in such a way
   - that the light source can send at least one input light beam with a known input intensity spectrum into the gas-insulated electrical apparatus, wherein the input light beam comprises light of at least one wavelength, which can be partially or entirely absorbed by said gas or gas component, and
   - that the entire gas is kept in the gas-insulated electrical apparatus,
b) sending the at least one input light beam into the gas-insulated electrical apparatus such that the resulting intermediate light beam travels along the optical measurement path, wherein the entire optical measurement path is arranged inside the gas-insulated electrical apparatus,
c) detecting by means of the light detector an output intensity spectrum of the output light beam exiting the gas-insulated electrical apparatus, and
d) deriving said parameter by comparing the input intensity spectrum with the output intensity spectrum and determining an optical absorbance signature of the gas or of at least a component of said gas by means of spectroscopic analysis.

The method is carried out by means of the analyzing device according to the first or the second aspect of the invention.

In embodiments of the analyzing device, the light detector and the light source of the analyzing device are connectable to the gas-insulated electrical apparatus in such a way that no gas extraction from the gas-insulated electrical apparatus takes place. In this way, the operator doesn't need to worry about gas leakage.

It is preferred that the light detector and the light source are arranged inside a housing which is attachable on an outer shell or encapsulation of the gas-insulated electrical apparatus. This may be accomplished by at least one bayonet joint, having the advantage of a tight seal and that an end attachment position is reproducible every time the analyzing device is used. This advantage is particularly predominant in case of the second aspect of the invention, where optical waveguides are not used. In these cases it is advantageous, if the light source and/or the light detector are located at the same position every time they are attached to the GIS.

Preferably, the spectroscopic analysis used in the method according to the invention is chosen from:
▪ Absorption measurement or
▪ Absorption spectroscopy or
▪ Tunable diode laser absorption spectroscopy (TDLAS)
▪ Integrated cavity output spectroscopy (ICOS) or
▪ Cavity ring-down spectroscopy (CRDS) or
▪ Cavity-enhanced absorption spectroscopy (CEAS) or
▪ Cavity-attenuated phase shift spectroscopy (CAPS).

### Brief Description of the Drawings

The invention will be better understood and objects other than those set forth above will become apparent when consideration is given to the following detailed description thereof. Such description makes reference to the annexed drawings, wherein it is shown in:
Fig. 1 - 4 schematical embodiments of a part of an analyzing device according to the first aspect of the invention, and
Fig. 5 - 11 schematical embodiments of a part of an analyzing device according to the second aspect of the invention.

### Modes for Carrying Out the Invention

In the context of the present invention the term "gas or a component thereof" is understood as encompassing a gaseous impurity and/or a gaseous decomposition component and/or an original electrically insulating component. Hence, an analysis according to the invention may not only be directed to any undesired components like impurities or decomposition gas types, but also to the insulating gas itself. Particularly, the insulating gas may itself be a single gas compound, like SF₆, or it may be composed of multiple components like the more recently introduced perfluoroketone compounds or perfluoronitriles. In the latter case, analysis may be performed for only one component or for multiple components of the insulating gas. Examples of such components/compounds are: SF₆, SO₂, CF₄, CO, H₂S, HF, H₂O, O₂. Examples of spectroscopic properties of SF₆ and contaminants can be found in the IEC standard 60480.

For a better understanding, the "light beam" is split into input light beam, intermediate light beam and output light beam, even though it is physically the same light beam. The input light beam is defined as the light beam exiting the light source and travelling up to a point where it enters the gas and has direct interaction with it. From that point onward, the light beam is referred to as intermediate light beam in order to emphasize its interaction with the gas. On its further path, as soon as the intermediate light beam doesn't have any contact with the gas anymore, it is referred to as output light beam. The term "total light beam" is directed to the entire light beam from the point where it exits the light source to the point where it enters the light detector.

In the text, the gas-insulated electrical apparatus is referred to as GIS (gas-insulated switchgear) for simplicity reasons. It is understood that the invention is not limited to gas-insulated switchgears or switches, but may encompass other types of gas-insulated apparatuses, in particular gas-insulated medium-voltage apparatuses or gas-insulated high-voltage apparatuses.

The term "light transport path" is defined as a portion of a total path of the light beam, along which the light beam doesn't interact with the gas inside the GIS. This term is typically used for embodiments using optical waveguides guiding the input light beam to the measurement path, but it may also be used in connection with the output light beam. Therefore it can be regarded as a length of the respective optical waveguides.

The term "optical measurement path" describes the portion of the total path of the light beam, along which the light beam interacts with the gas inside the GIS.

In the following, the different embodiments of the analyzing device will be described. Similar or similarly acting elements are denoted by the same references for the different embodiments shown in the figures and are only described in detail at their first occurrence in the text.

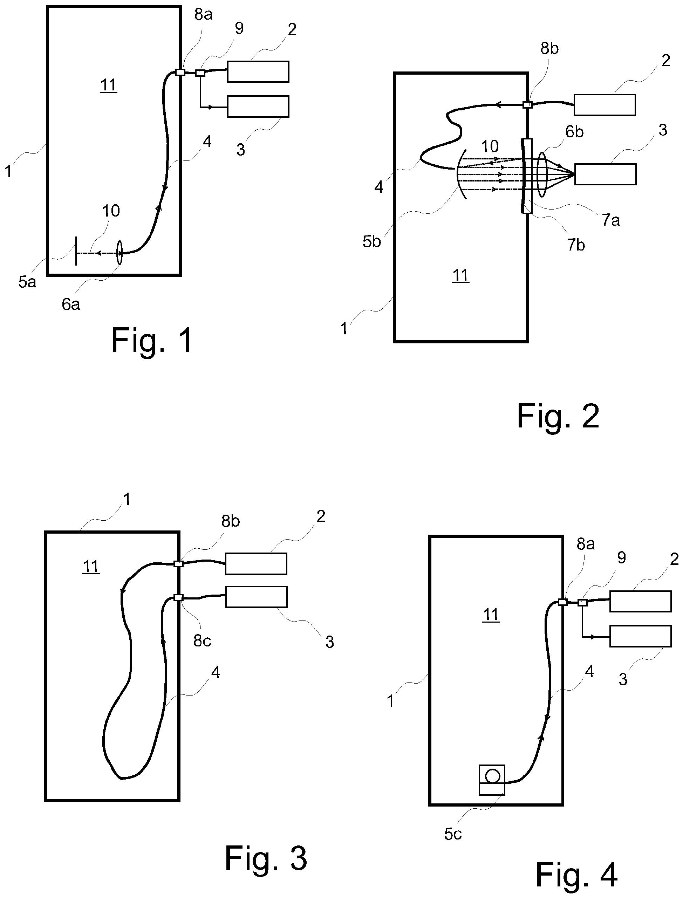

Fig. 1 shows a schematical lateral section view of a GIS 1 containing an insulating gas 11 and of a first embodiment of the analyzing device. The analyzing device comprises a light source 2, a light detector 3 and an opto-mechanical arrangement. The opto-mechanical arrangement comprises a first optical waveguide 4, hereinafter referred to as first optical fiber, which is a preferred type of waveguide, a flat mirror 5a and a fiber collimator 6a (or a simple collimation lens). A measurement path arranged between the flat mirror 5a and the fiber collimator 6a is denoted by the dashed line and has the reference 10. In this embodiment, the first optical fiber 4 is adapted to guide the input light beam along a light transport path. The first optical fiber 4 ends at a beginning of the optical measurement path, as seen in a direction of propagation of the input light beam.

For simplicity reasons, additional components of the analyzing device, like electronics, display, etc. are not shown, as they are known to the skilled person.

The light source 2 is selected as a single element or a combination of elements of the group consisting of: laser, light-emitting diode, halogen lamp, light bulb, arc lamp, electrodeless discharge lamp, plasma lamp, and thermal radiator, particularly black body radiator, UV-lamp, infrared lamp. The light source 2 is chosen such that the light spectrum, which it is able to produce, encompasses a specific spectral region wavelength, the photons of which are known to be absorbed by the gas or gas component of interest. Light sources with a broad wavelength spectrum as well as light sources with a very narrow spectrum (e.g. UV or IR) may be used. As the present invention not only permits analysis of a single gas, but also of multiple gas components during the same measurement, the light source 2 is chosen such that the interesting wavelengths are within the light spectrum of the light source. In this context, it is noted that the light source may be adapted to produce multiple beams of light with different wavelengths. In such a case, it is preferred that the plurality of light beams is coupled into a single first optical fiber 4. Certainly, several first optical fibers 4 can also be used (e.g. fiber bundles).

The light detector 3 may e.g. be a spectrometer, in the input path of which an attenuator may be arranged in order to avoid saturation of the spectrometer.

In this embodiment, it is preferred that the first optical fiber 4 is adapted to guide the output light beam from an end of the optical measurement path 10, as seen in a direction of propagation of the intermediate light beam, to the exit point 8a from the gas-insulated electrical apparatus 1 for detection by the light detector 3. The output light beam is then routed to the light detector by the routing element 9. It is noted that the optical measurement path 10 is regarded as the double of the dashed line 10, as the intermediate light beam is reflected by an optical element 5a and therefore travels double the distance between the element 5a and the fiber collimator 6a. In this way, material is saved, as the first optical fiber 4 can be used for both the input light beam and the output light beam.

In embodiments, the optical element 5a of the opto-mechanical arrangement may be a flat or curved mirror or a retroreflector (e.g. a corner reflector or a cat's eye) for reflecting the intermediate light beam towards the end of the optical measurement path. In the shown embodiment, the element is a flat mirror 5a. The flat mirror 5a is arranged in the optical measurement path 10 at a location where it reverses the direction of propagation of the intermediate light beam. Said location depends on the total required optical measurement path 10 for ensuring, that enough gas absorption for the analysis takes place. This concept of arranging elements of the opto-mechanical arrangement is used for all embodiments of the analyzing device in which the intermediate light beam doesn't travel inside an optical waveguide.

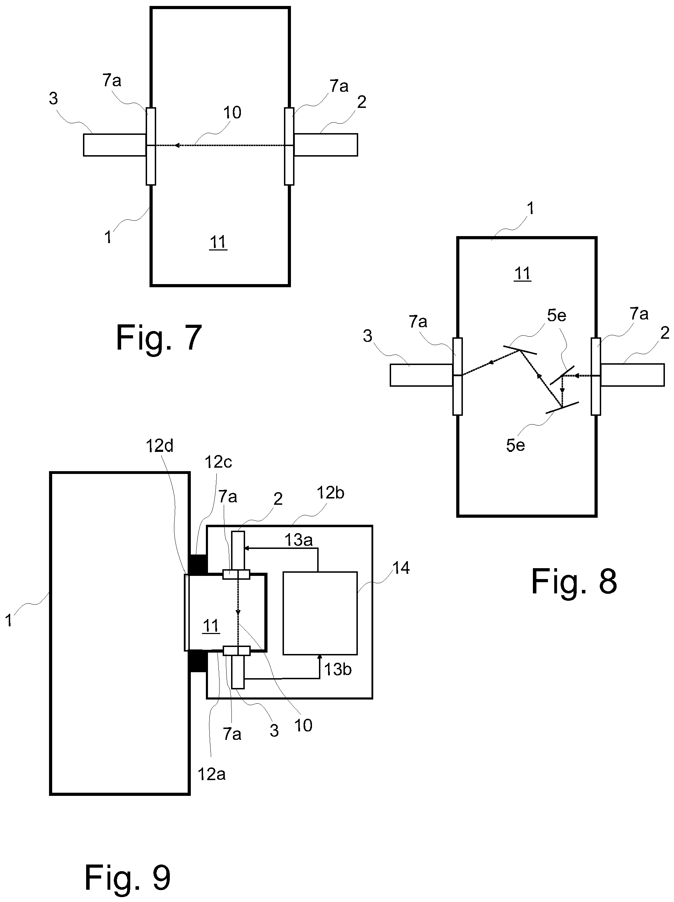

Alternatively, it is also possible to use a combination of mirrors (see exemplarily Fig. 8) for reflecting the intermediate light beam towards the end of the optical measurement path 10. The combination of mirrors is arranged along at least a part of the optical measurement path 10. Preferably, the combination of mirrors is arranged as a multipass cell, for example a Herriot cell, or as highly reflective mirrors for cavity ring-down spectroscopy. By using a combination of mirrors it is possible to extend the optical measurement path 10 by reflecting the intermediate light beam from one mirror to a next mirror, until a last mirror reflects it towards the end of the optical measurement path 10.

A variant of the embodiment according to Fig. 1 comprises at least a second optical waveguide (not shown), particularly an optical fiber, for guiding the output light beam. The second optical waveguide begins at an end of the optical measurement path 10, as seen in a direction of propagation of the intermediate light beam, and is adapted to guide the output light beam to the exit point from the gas-insulated electrical apparatus 1 for detection by the light detector 3. In this way the light beam input is decoupled from the light beam output. This is particularly advantageous in case the light detector is arranged "far" from the light source, i.e. if the exit point is arranged at a different location than an input point.

In all embodiments using optical waveguides for guiding the input/output light beam, the input/exit point is formed by a fiber feedthrough with a connector.

Fig. 2 shows another embodiment of the analyzing device, which preferably uses an enhanced cavity to detect the parameter sought after. In this embodiment, the opto-mechanical arrangement comprises a partially reflecting, curved mirror 5b (or alternatively a flat mirror), i.e. a dichroic mirror, arranged in the optical measurement path 10 between the end of the first optical waveguide 4, which enters the GIS through a feedthrough 8b, and the exit point. The partially reflecting mirror 5b is adapted to allow at least a fraction of the intermediate light beam through it on the way to the exit point. Advantageously, this embodiment allows filtering out (reflecting) a portion of the light spectrum of the intermediate light beam which is not interesting for the subsequent analysis. This advantageously simplifies the analysis of the output light beam. In other words, filtering enables a better signal to noise ratio, if only a small part of the spectrum is sensitive to absorption (a filter, e.g. a band-pass filter, then reduces the overall intensity on the detector).

Furthermore, the window 7a has an additional partially reflecting mirror 7b on its inner side inside the GIS. The two partially reflective mirrors 5b, 7b act as multipass cell for the intermediate light beam. Partially reflecting mirrors are used to form a resonant cavity, by means of which measurement path lengths of kilometers can be realized, which advantageously leads to the possibility of increasing detection accuracy as the absorption level can consequently be increased considerably along such a much longer path. Since the mirrors 5b, 7b are partially reflective/permissive, light can be coupled in and out through the mirrors (although they are 99.9% or 99.99% reflective for a specific wavelength range). Due to clarity of the figure, the back and forth reflection is only illustrated by an exemplary light beam running from the mirror 7b towards the mirror 5b. Even in case of highly reflective mirrors, every time light impinges the mirror 7b, a fraction of it with the specific interesting wavelength passes through the mirror and reaches the light detector 3 (illustrated by the solid arrows). During the back-and-forth reflection of the intermediate light beam between the two mirrors 5b, 7b, more light is absorbed with every pass. This makes it possible to derive from the output signal either a ring-down time (decay time of the signal) or a transmission intensity signal as a measure of the absorption. The ring-down time or the transmission intensity makes it possible to further derive the concentration of the interesting gas or gas component inside the GIS. Alternatively, mirror 5b may comprise a hole through which the collimated input light beam (additional fiber collimator arranged between end of optical fiber 4 and mirror 5b like the one of Fig. 1) coming from the optical fiber 4 is injected into the resonant cell formed by the two partially reflecting mirrors 5b, 7b. Advantageously, these embodiments has an increased detection accuracy due to the fact that the optical measurement path 10 is substantially extended due to the numerous reflections of the intermediate light beam.

In a variant of this embodiment (not shown), the light source is swapped with the light detector in the figure. This means that the input light beam is sent into the GIS through the window 7a and the additional mirror 7b, where it enters the resonant cell and reflects back and forth as already mentioned. The portion of the intermediate light beam which passes through the mirror 5b (or through the above mentioned hole) is collected in the optical fiber 4 (which in this case acts like an output waveguide) by a fiber collimator like the fiber collimator 6a of Fig. 1, and is guided as output light beam to the light detector 3. Thus, the hole in the mirror 5b may also be used as "output hole" through which the light beam can exit the resonant cell.

In this embodiment and in all embodiments not using optical waveguides, the input/exit point is formed as a window 7a made of or coated with a material which is partially permissive to the intermediate light beam. A convex lens 6b is preferably provided on the outside of the window 7a for focusing the output light beam into the light detector 3.

Fig. 3 and Fig. 4 show two further embodiments of the analyzing device. In the embodiment of Fig. 3, the first optical waveguide 4 is adapted to guide the intermediate light beam along the optical measurement path. The light source emits the input light beam into the first optical waveguide 4, which enters the GIS through a feedthrough 8b and exits it through the exit point 8c. The first optical fiber 4 is structured over at least one defined distance of its length in a way that its optical field can interact with the gas. In other words, at least a section of the first optical waveguide 4 forms itself the optical measurement path. The first optical waveguide 4 may be an optical fiber comprising perforations or being at least partially stripped of its coating and cladding along said distance, in order to enable an evanescent field near the surface of the optic fiber and consequently to reach an interaction of the light beam with the gas. Alternatively, the embodiment of Fig. 4 shows the use of an integrated waveguide (e.g. a microphotonic chip), preferably an integrated optics chip with structured waveguides. In this case the first optical fiber delivers the input light beam to the microphotonic chip. An evanescent field extends into the gas. A change in refractive index around the guiding structure is dependent on gas concentration. By using a microphotonic resonator, the change in refractive index is translated into a change in resonance frequency (spectral evaluation). Alternatively, the attenuation of light can be measured (intensity evaluation). As a third alternative (not shown) a tubular structure, preferably a hollow waveguide may be used. Such hollow waveguides are e.g. manufactured by the company Doko Engineering, Sendai, Japan. Advantageously, a microphotonic chip can be designed to be very much more sensitive than an evanescent field sensor like the one of Fig. 3. Also, a localized concentration measurement can be made, which may be interesting for tracking particularly critical locations in the GIS (e.g. near sealings or near locations prone to defects, such as partial discharge). Another advantage is that an average value of gas concentration of the analyzed gas species (at least along the waveguide) is obtained, as there are gradients of gas molecule number density due to temperature and/or due to permeable seals (particularly in case of water) at the walls of the GIS compartments and due to desiccants placed inside the GIS. Furthermore, the waveguide can be protected in an easy way by a flexible tube that is arranged around it and that is permeable for gas and impermeable for particles. In contrast to this, mirrors cannot be protected in the same way, since they cannot be blocked by matter (light must be able to impinge onto it)

The now following embodiments relate to the second aspect of the invention, in which the analyzing device does not comprise any waveguides. While the analyzing device according to the first aspect of the invention has the advantage that it provides extended flexibility in terms of arrangement of the optical measurement path 10, the analyzing device according to the second aspect of the invention is simpler and therefore less expensive, as mentioned.

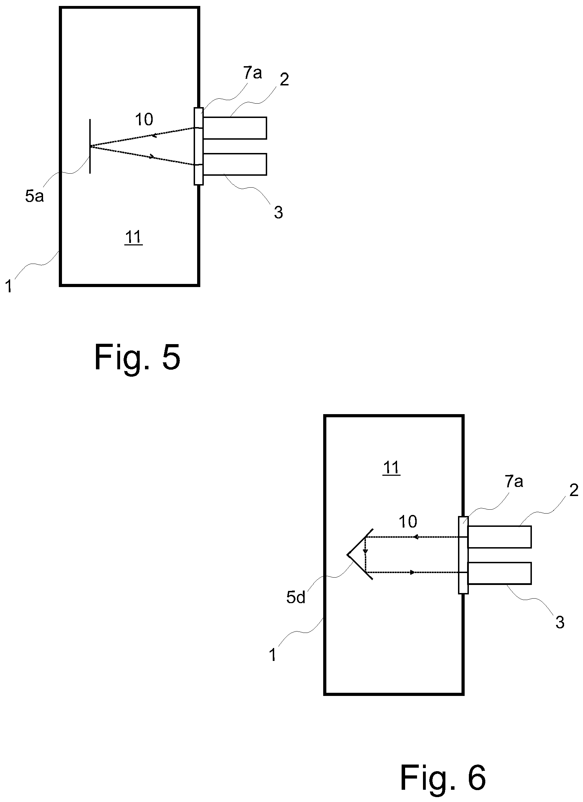

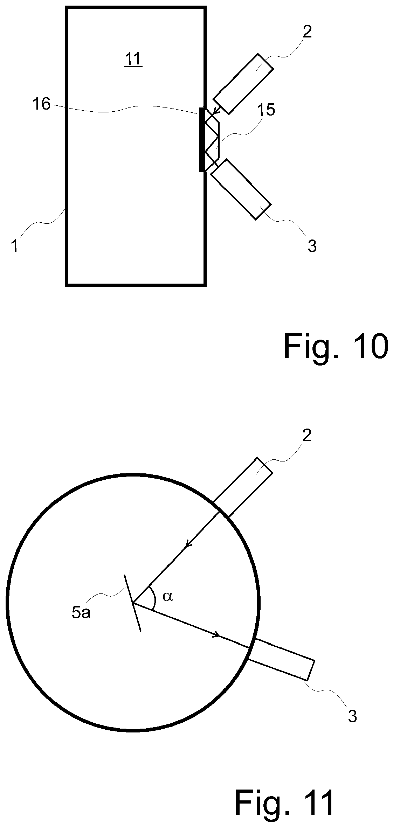

Fig. 5 and 6 show each an embodiment where the light source 2 and the light detector 3 are adjacent and at least one optical deflection element is arranged in the path of the intermediate light beam such that it deflects the intermediate light beam towards the light detector 3. The light source 2 and the light detector 3 are preferably arranged directly at the window 7a, which serves as input point and exit point. In Fig. 5, a flat mirror 5a is arranged inside the GIS for reflecting the light coming from the light source 2 towards the light detector 3. In Fig. 6 a retroreflector 5d is arranged inside the GIS for reflecting the light coming from the light source 2 towards the light detector 3. However, the light source 2 and the detector 3 may be arranged at an angle α 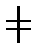 180° with respect to one another. This arrangement is illustrated in Fig. 11 and is particularly advantageous, when an obstacle, typically a bus bar of the GIS, would be arranged in the way of the beam, if the light source 2 and the light detector 3 were opposite to one another.

Alternatively to the embodiments of Fig. 5 and 6, in the embodiments according to Fig. 7 to 9 the light source 2 and the light detector 3 are arranged on opposite sides of at least one partial volume of the gas-insulated electrical apparatus. In Fig. 7 and 8 they are arranged on opposite sides of a main body of the GIS 1.

As can be seen in Fig. 7, the total light beam is not deflected on its path from the light source 2 to the light detector 3. In other words, the input light beam, the intermediate light beam and the output light beam travel along an identical line.

In the embodiment of Fig. 8, only the input light beam and the output light beam travel along an identical line. Here, bulk optics 5e (combination of optical deflection elements) are used in the path of the intermediate light beam such that it deflects the intermediate light beam on its way towards the light detector 3. In this way, the optical measurement path is increased for better analysis results.

In Fig. 9, the light source 2 and the light detector 3 are arranged on opposite sides of a protrusion 12a of the GIS 1, inside which protrusion 12a the partial volume 11 is arranged. In embodiments, the partial volume 11 in the protrusion is separated from the main volume of the GIS by a filter 12d for preventing or reducing a contamination of the partial volume with particles from the main volume. This will be described later in more detail. In this case, it is preferred that the analysis device comprises a housing 12b, which is adapted to have a cavity inside which the protrusion 12a or a part of it is received. The housing 12b further comprises a locking element 12c, which is preferably a bayonet joint. As mentioned, the bayonet joint is advantageously used in order to provide a reproducible position of the analyzing device on the protrusion 12a. Furthermore, a control and processing unit 14 is arranged inside the housing 12b. The control and processing unit 14 may have multiple tasks; it may trigger a measurement by controlling the light detector 2; it may analyze the output light beam; it may potentially synchronize the light source with the light detector; it may provide a user interface. It is noted that this control and processing unit is present in all embodiments of the analyzing device.

In this embodiment, the analyzing device is compact, as all elements of the analyzing device are arranged inside the housing 12b. However, it may also be a rather distributed analyzing device, where the individual elements are not necessarily all arranged inside a common housing, e.g. in case of the embodiments comprising an opto-mechanical arrangement.

Fig. 10 shows a further embodiment of the analyzing device according to the second aspect of the invention. This embodiment is based on evaluation of an evanescent field (see context of Fig. 3 and 4), however without using an optical waveguide to guide the light beam but bulk optics. In this case a bulk optics element 15 is arranged on the GIS 11 between the exit point and the analyzing device. The light source sends an input light beam into the bulk optics element at such an angle with respect to an axis of the optics bulk element, that the intermediate light beam is reflected in its interior until it reaches the light detector 3, wherein the intermediate light beam creates an evanescent field 16 inside the GIS at the surface of the bulk optics element 15. In other words, in this embodiment the bulk optics element 15 is arranged on the GIS 11 such that a surface of it is in physical contact with the gas volume of the GIS 11, and it allows the intermediate light beam to create an evansecent field 16 at or near the surface of the bulk optics element 15 inside the gas volume of the GIS, in particular in the gas or gas mixture of interest inside the GIS 11. A reference for gas sensors based on evanescent fields can be found in Olyaee et al.; «High sensitivity evanescent-field gas sensor based on modified photonic crystal fiber for gas condensate and air pollution monitoring", Optik 125 (2014) 596-600.

As mentioned at the beginning, the third aspect of the invention concerns a method for optically determining at least a parameter of a gas arranged inside a gas-insulated electrical apparatus or of at least a component of said gas.

Preferably, the parameter is a presence and/or an absence and/or a concentration and/or a number density of the gas or of at least a component thereof. The component is at least a gaseous impurity and/or a gaseous decomposition component and/or an original electrically insulating component. The presence is determined by detecting an absorption of the gas or a gas component by detecting a lower intensity of said gas or component in the output light beam than in the input light beam. The absence may be e.g. determined in the same way, if no intensity decrease in the output light beam is detected or if such decrease is negligible. The absence may, however, also be determined by measuring the ring-down time as mentioned in the scenario of Fig. 2, where cavity ring-down spectroscopy is used. During a back-and-forth reflection of the intermediate light beam between the two mirrors 5b, 7b, more light is absorbed with every pass. If substantially only the insulating gas is present in the GIS, the ring-down time has a certain expected course over time. If the ring-down time curve falls faster than expected, another gas, e.g. a contaminant, is also present in the GIS. These analyzing options may be regarded as the simplest and fastest ones. Detection of presence may also allow an a priori coarse assessment of the amount of the gas in question, e.g. the operator may be able to coarsely estimate a degree of contamination of the insulating gas. In certain cases this might be enough for triggering certain actions, like e.g. replacement of the insulating gas. However, if more precise results are required and presence of said gas or component was detected, it is also possible to calculate the number density of molecules of said gas or component and deriving the concentration of said gas or component. The concentration of the gas or gas component may be calculated using the Lambert-Beer law. This is known and will not be described here in more detail.

It is furthermore also possible to measure a purity of an insulation gas component as the parameter, wherein a measurement of gas density or absolute pressure and temperature of the gas or component is carried out inside the gas as an additional step. For this, the analyzing device may comprise at least one pressure sensor and one temperature sensor.

If an opto-mechanical arrangement shall be arranged inside the gas-insulated electrical apparatus, elements of the opto-mechanical arrangement will be placed in areas, where their influence on an electromagnetic field of the gas-insulated electrical apparatus is minimal, e.g. in field shadow areas.

If an opto-mechanical arrangement is arranged inside the GIS, these elements are typically left inside the GIS and are not removed after each test. Preferably, they are attached inside the GIS during its manufacturing and the input and exit points are also provided at this point, such that the GIS-external parts of the analyzing device only need to be connected for carrying out a measurement. Alternatively, it is possible to insert said elements into the GIS during a downtime or maintenance procedure. Although it is preferred to arrange the elements permanently inside the GIS for reasons of simplicity, optical surfaces of these elements may be contaminated over time, i.e. "coated" or covered by a thin film of molecules or particulates (e.g. dust, condensates). In this case, the surfaces have to be freed of said film in order to avoid that the film acts as an undesired absorption filter for the intermediate light beam. This contamination is preferably dealt with as an additional step in one of the following ways.

A first option is to at least partially remove it by an active cleaning process. This can be done e.g. by vibration by means of a piezo element, or by means of wipers.

A second option is to at least partially passively compensate for said contamination by measuring an absorption effect of a contaminated layer of said optical surface and take it into account during evaluation of the output light beam intensity spectrum.

A third option is to at least partially avoid it by protecting optical surfaces of the opto-mechanical arrangement with a suitable material, e.g. a porous material.

In the context of the third alternative, it is mentioned that all optically relevant surfaces, including surfaces of the window 7a, may be provided with a coating supressing build-up of contamination or with a separate filter (see filter 12d of Fig. 9) or as a repellent for accumulation of particles (e.g. a hydrophobic material, a.k.a. lotus effect). Furthermore, the window or windows 7a may be formed as wedged window(s) for avoiding back reflections of light towards the light source 2 and/or light detector 3.

The following table contains typical specification values of an analyzing device for measurements of gas components (contaminants) in case of a GIS filled with SF₆.

| **Gas** | H₂O | HF | SO₂(SOF₂) | CF₄ | CO |
|---|---|---|---|---|---|
| **Range** | -50... (+20) °C dewpoint (i.e. ≈40...20000 ppm) | 0...100 ppm | 0...500 ppm | 3% | 0...500 ppm |
| **Accuracy** | ±2K (dewpoint) | ±5 ppm | ±5 ppm | ±5 ppm | ±5 ppm |
| **Resolution** | 0.1K | 0.1 ppm | 0.1 ppm | 0.1 ppm | 0.1 ppm |

The analyzing device and the method described herein have several advantages as compared to conventional solutions. Due to the fact that the solution provides an analysis possibility without having to extract gas from the GIS, downtime of the GIS-system may be significantly reduced. Due to easier service and maintenance the operator experiences a faster return of investment. Furthermore, there is no risk of failure of gas handling, since the gas is not touched. Finally, a more flexible and better prediction of maintenance of GIS results.

Another advantage of the invention is that it enables to carry out distributed, averaged measurements: the gas is not analyzed at a single location (like with extractive devices) but the average concentrations over the entire interaction length of the light beam (optical measurement path) is determined. The optical measurement path can be quite long, e.g. for the stripped evanescent fiber (Fig. 3), or for intermediate light beams crossing the GIS. Furthermore, measurements can be taken at multiple individual locations, e.g. by creating a daisy chain of microphotonic chips connected by fiber positioned in neuralgic locations inside the GIS.

While there are shown and described presently preferred embodiments of the invention, it is to be distinctly understood that the invention is not limited thereto but may be otherwise variously embodied and practiced within the scope of the following claims. Therefore, terms like "preferred" or "in particular" or "particularly" or "advantageously", etc. signify optional and exemplary embodiments only.

### List of references

- 1: = gas-insulated electrical apparatus
- 2: = light source
- 3: = light detector
- 4: = optical waveguide
- 5a: = flat mirror
- 5b: = partially reflective mirror
- 5c: = optics chip
- 5d: = retroreflector
- 5e: = combination of mirrors
- 6a: = fiber collimator
- 6b: = concave lens
- 7a: = light access window
- 7b: = window coating or filter or partially reflective and partially permissive mirror
- 8a: = coinciding input and output point
- 8b: = input point
- 8c: = output point
- 9: = routing element
- 10: = optical measurement path
- 11: = gas
- 12a: = protrusion of GIS
- 12b: = housing of analyzing device
- 12c: = bayonet joint
- 12d: = filter
- 13a: = connection between processing unit and light source
- 13b: = connection between processing unit and light detector
- 14: = control and processing unit
- 15: = bulk optics
- 16: = evanescent field
- α: = angle between the light source and the light detector

## Claims

1. An analyzing device for optically determining at least a parameter of a gas (11) arranged inside a gas-insulated electrical apparatus (1) or of at least a component thereof, comprising
- a light source (2) arranged outside the gas-insulated electrical apparatus (1) for generating at least an input light beam to be sent into the gas-insulated electrical apparatus (1),
- an opto-mechanical arrangement arranged at least partially inside the gas-insulated electrical apparatus (1) and connected to the light source (2), wherein the opto-mechanical arrangement defines an optical measurement path (10) along which an intermediate light beam travels, wherein the intermediate light beam results from an interaction of the input light beam with the gas (11) in the electrical apparatus (1),
- a light detector (3) arranged outside the gas-insulated electrical apparatus (1), wherein the light detector (3) is adapted to detect an output light beam, which results from the intermediate light beam and which exits the gas-insulated electrical apparatus (1) at an exit point (8a; 8c),
wherein the opto-mechanical arrangement comprises at least a first optical waveguide (4) arranged inside the gas-insulated electrical apparatus (1) and adapted to guide the intermediate light beam along the optical measurement path (10) or adapted to guide the first light beam and/or the output light beam along a light transport path located inside the gas-insulated electrical apparatus (1).

2. The analyzing device according to claim 1, wherein, in case the first optical waveguide (4) is adapted to guide the input light beam along the light transport path, the first optical waveguide (4), which is particularly an optical fiber, ends at a beginning of the optical measurement path (10), as seen in a direction of propagation of the input light beam.

3. The analyzing device according to claim 2, comprising at least a second optical waveguide, particularly an optical fiber, for guiding the output light beam, wherein the second optical waveguide begins at an end of the optical measurement path, as seen in a direction of propagation of the intermediate light beam, and is adapted to guide the output light beam to the exit point from the gas-insulated electrical apparatus for detection by the light detector.

4. The analyzing device according to claim 2, wherein the first optical waveguide (4) is adapted to guide the output light beam from an end of the optical measurement path (10), as seen in a direction of propagation of the intermediate light beam, to the exit point (8a) from the gas-insulated electrical apparatus (1) for detection by the light detector (3).

5. The analyzing device according to claim 3 or 4, wherein the opto-mechanical arrangement comprises
either a flat (5a) or curved mirror or a retroreflector (5d) for reflecting the intermediate light beam towards the end of the optical measurement path (10), wherein the flat or curved mirror or the retroreflector is arranged in the optical measurement path (10) at a location where it changes the direction of propagation of the intermediate light beam, or
a combination of mirrors (5e) for reflecting the intermediate light beam towards the end of the optical measurement path (10), wherein the combination of mirrors (5e) is arranged along at least a part of the optical measurement path (10), particularly wherein the combination of mirrors (5e) is arranged as a multipass cell, specifically a Herriot cell, or as highly reflective mirrors for cavity ring-down spectroscopy.

6. The analyzing device according to claim 2, wherein the opto-mechanical arrangement comprises a partially reflecting, planar or retro-reflector or curved mirror (5b) arranged in the optical measurement path (10) between the end of the first optical waveguide (4) and the exit point and adapted to allow at least a fraction of the intermediate light beam to traverse the partially reflecting mirror (5b) on the way to the exit point.

7. The analyzing device according to claim 1, wherein, in case the first optical waveguide (4) is adapted to guide the intermediate light beam along the optical measurement path (10), the first optical waveguide (4) is structured over at least one defined distance of its length in a way that its optical field can interact with the gas, particularly wherein the first optical waveguide (4) is one of:
- an optical fiber comprising perforations or is at least partially stripped of its coating and cladding along said distance,
- an integrated waveguide, particularly an integrated optics chip (5c) with structured waveguides,
- a tubular structure, particularly a hollow waveguide.

8. An analyzing device for optically determining at least a parameter of a gas (11) arranged inside a gas-insulated electrical apparatus (1) or of at least a component thereof, comprising
- a light source (2) arranged outside the gas-insulated electrical apparatus (1) for generating at least an input light beam to be sent into the gas-insulated electrical apparatus (1) through an input point,
- a light detector (3) adapted to detect an output light beam which exits the gas-insulated electrical apparatus (1) through an exit point and arranged outside the gas-insulated electrical apparatus (1) in such a way that an optical measurement path (10) is defined at least in a section of a path between the input point and the exit point, wherein an intermediate light beam travels along the optical measurement path (10), wherein the intermediate beam results from an interaction of the input light beam with the gas (11),
wherein no optical waveguide is arranged in a total light beam path from the light source (2) to the light detector (3).

9. The analyzing device according to claim 8,
wherein the light source (2) and the light detector (3) are arranged
either on opposite sides of at least one partial volume of the gas-insulated electrical apparatus (1), particularly on opposite sides of a main body of the gas-insulated electrical apparatus (1) or on opposite sides of a protrusion of the gas-insulated electrical apparatus (1), inside which protrusion the partial volume is arranged, such that the input light beam and the output light beam travel along an identical line, particularly wherein a combination of optical deflection elements (5e) is arranged in the optical measurement path (10), such that it deflects the intermediate light beam towards the light detector (3),
or are arranged at an angle different than 180° with respect to one another, particularly adjacent, and at least one optical deflection element (5a, 5d) is arranged in the optical measurement path (10), such that it deflects the intermediate light beam towards the light detector (3).

10. The analyzing device according to claim 8 or 9, wherein at least a bulk optics element (15) is arranged on the gas-insulated electrical apparatus (1) between the exit point and the analyzing device and is adapted to reflect the input light beam in its interior at least once and deliver the intermediate light beam to the light detector (3) in such a way, that the intermediate light beam creates an evanescent field (16) on the inside of the gas-insulated electrical apparatus (1) at the surface of the bulk optics element (15).

11. The analyzing device according to one of the preceding claims, wherein at least the light detector (3) and the light source (2) of the analyzing device are connectable to the gas-insulated electrical apparatus (1) in such a way that no gas extraction from the gas-insulated electrical apparatus (1) takes place, particularly wherein the light detector (3) and the light source (2) are arranged inside a housing (12b), which is attachable on an outer shell of the gas-insulated electrical apparatus (1) in such a way, that no gas extraction from the gas-insulated electrical apparatus (1) takes place, in particular wherein the housing (12b) is attachable on the gas-insulated electrical apparatus (1) by at least one bayonet joint (12c).

12. A method for in-situ optically determining at least a parameter of a gas (11) present inside a gas-insulated electrical apparatus (1) or of at least a component of said gas (11) by means of an analyzing device according to any one of the preceding claims, comprising the steps of:
a) connecting the analyzing device to the gas-insulated electrical apparatus (1) in such a way
- that the light source (2) can send at least one input light beam with a known input intensity spectrum into the gas-insulated electrical apparatus (1), wherein the input light beam comprises light of at least one wavelength which can be partially or entirely absorbed by said gas (11) or gas component, and
- that the entire gas (11) is kept in the gas-insulated electrical apparatus (1),
b) sending the at least one input light beam into the gas-insulated electrical apparatus (1) such that the resulting intermediate light beam travels along the optical measurement path (10), wherein the entire optical measurement path (10) is arranged inside the gas-insulated electrical apparatus (1),
c) detecting by means of the light detector (3) an output intensity spectrum of the output light beam exiting the gas-insulated electrical apparatus (1), and
d) deriving said parameter by comparing the input intensity spectrum with the output intensity spectrum and determining an optical absorbance signature of the gas (11) or of at least a component of said gas by means of spectroscopic analysis.

13. The method according to claim 12, wherein a presence and/or an absence and/or a concentration and/or a number density of the gas or of at least a component of the gas is measured as the at least one parameter, in particular wherein the component is at least a gaseous impurity and/or a gaseous decomposition component and/or an originally present electrically insulating gas component.

14. The method according to any one of the claims 12 to 13, wherein a purity of an insulation gas component is measured as the parameter, wherein a measurement of gas density or absolute pressure and temperature of the gas is carried out inside the gas as an additional step e).

15. The method according to any one of the claims 12 to 14, wherein, if an opto-mechanical arrangement is arranged inside the gas-insulated electrical apparatus (1), elements of the opto-mechanical arrangement are arranged in areas where their influence on an electromagnetic field of the gas-insulated electrical apparatus (1) is minimal, particularly in field shadow areas.

16. The method according to any one of the claims 12 to 15, wherein, if an opto-mechanical arrangement is arranged inside the gas-insulated electrical apparatus (1), a contamination of at least one optical surface of the opto-mechanical arrangement is
at least partially removed by an active cleaning process, particularly by vibration or by means of wipers, or
at least partially passively compensated for by measuring an absorption effect of a contaminated layer of said optical surface, or
at least partially avoided by protecting optical surfaces of the opto-mechanical arrangement with a porous material that is permeable for gas, but not for particles of solid material.
